# NOUVEAU FASCICULE DE BREVET EUROPEEN

(11) **EP 2 280 887 B2**
(45) Date de publication et mention de la décision concernant l'opposition: **05.03.2014**
(45) Mention de la délivrance du brevet: 29.06.2011
(21) Numéro de dépôt: 09745945.7
(22) Date de dépôt: 16.04.2009
(51) Int. Cl.: B65G 47/248, B29C 49/42

(54) **DISPOSITIF DE CONVOYAGE VRILLE POUR PREFORMES**
DREHFÖRDERUNGSVORRICHTUNG FÜR VORFORMEN
TWISTING CONVEYING DEVICE FOR PREFORMS

(30) Priorité: 18.04.2008 FR 0802146
(43) Date de publication de la demande: 09.02.2011
(73) Titulaire: Sidel Participations, 76930 Octeville Sur Mer (FR)
(72) Inventeur: BIANCHINI, Cédric, 76930 Octeville-sur-Mer (FR)
(74) Mandataire: Cabinet Plasseraud
(86) Numéro de dépôt international: PCT/FR2009/050702
(87) Numéro de publication internationale: WO 2009/138626

(56) Documents cités:
- EP-A- 0 511 048
- EP-A1- 2 048 097
- EP-A1- 2 213 594
- EP-B1- 2 048 097
- WO- -2006/084831
- WO-A1-2007/116155
- WO-A1-2011/029949
- WO-A2-2006/125911
- WO-A2-2007/028627
- DE-A1-102005 048 126
- DE-T2- 60 116 064
- FR- - 2 886 205
- US-A- 5 186 307
- US-A1- 2009 211 880
- US-A1- 20070 108 018
- US-B1- 6 189 701
- US-B1- 7 891 480
- US-B2- 8 074 782

## Description

La présente invention concerne un dispositif de convoyage de produits du genre préformes, comme, par exemple, des bouteilles, des flacons,...etc.

Le document WO2007028627 montre un dispositif convoyeur qui permet de modifier l'orientation des préformes au moyen d'une sorte de vrille, pour les faire passer d'une position horizontale à une position verticale, par exemple.

Ce type de vrille est réalisé au moyen de guides qui sont façonnés en forme d'hélices ; l'espacement entre les arêtes de guidage se doit d'être constant pour obtenir une parfaite fluidité du flux de préformes entre l'entrée et la sortie de ce dispositif convoyeur particulier.

Ce genre de vrille est relativement délicat à réaliser à cause de la complexité des formes et de l'extrême précision qui est requise pour effectuer un guidage sans incidents.

De plus, ce genre de vrille ne s'accommode pas facilement des changements de formats des préformes; il faut changer l'ensemble du dispositif convoyeur.

Le dispositif de convoyage pour produits du genre préformes, selon l'invention, est conforme à la revendication 1. Des détails du dispositif sont selon les revendications dépendantes.

Mais le dispositif sera encore détaillé à l'aide de la description suivante et des dessins annexés, donnés à titre indicatif et dans lesquels:
- la figure 1 est une vue schématique dépouillée du dispositif de convoyage en forme de vrille selon l'invention, apte à guider des préformes,
- la figure 2 est une vue schématique de l'extrémité amont de la vrille
- la figure 3 est une vue schématique de l'extrémité aval de la vrille.

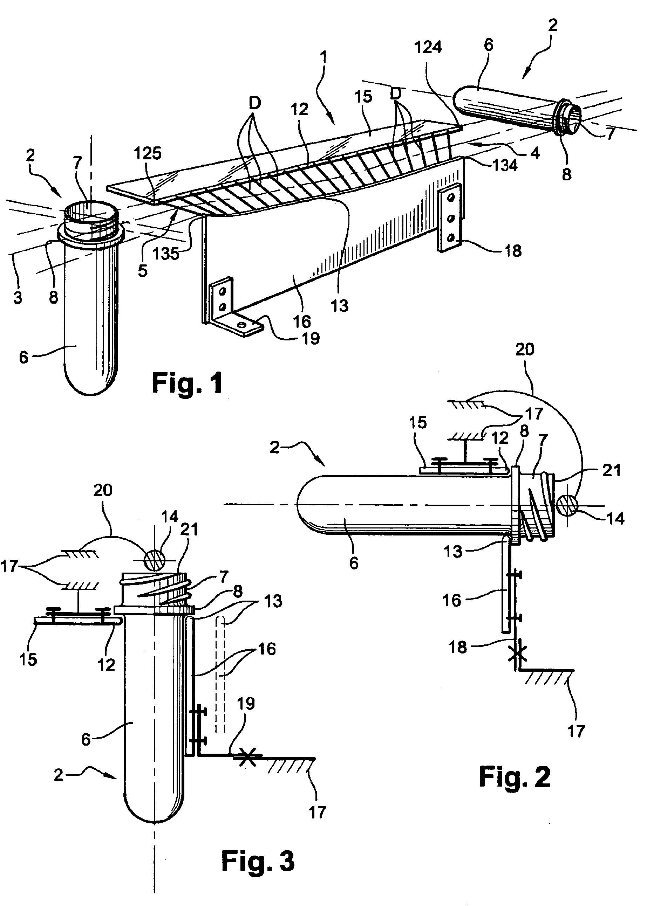

Tel que représenté figure 1, le dispositif (1) de convoyage permet de conjuguer un mouvement longitudinal des préformes (2) et un mouvement de pivotement de ces dernières autour de l'axe longitudinal (3) de déplacement.

Ce type de dispositif(1) s'insère dans une ligne de convoyage de préformes (2) lorsqu'il est nécessaire de modifier leur orientation, quelle que soit l'orientation initiale de ces préformes.

Dans l'exemple représenté figure 1, les préformes (2) passent de la position horizontale à l'entrée (4) du dispositif (1) à une position verticale à sa sortie (5).

Ces préformes (2) ont généralement un corps (6) tubulaire fermé à une extrémité et l'autre extrémité constitue, par exemple, un embout (7) avec un filetage, lequel embout est délimité par rapport audit corps (6) avec une collerette (8).

Durant leur convoyage, les préformes (2) bénéficient d'un guidage au niveau de la partie du corps (6) qui se situe sous la collerette (8), en coopération avec cette dernière, et ce guidage est couramment dénommé : guidage sous col.

Ce guidage, pour être complet et efficace, s'effectue, d'une part, au moyen de deux rails (12) et (13) qui réalisent ce guidage sous col et, d'autre part, selon le cas, au moyen d'un rail (14) complémentaire, visible sur les figures 2 et 3. Ce rail (14), détaillé plus loin, s'étend entre l'entrée (4) et l'extrémité (5) et il est façonné pour former, avec les rails (12) et (13), une sorte de tunnel dans lequel se trouve emprisonnée l'extrémité ouverte des préformes (2).

Ce dispositif (1) convoyeur, selon l'invention présente la particularité de comporter, entre l'entrée (4) et la sortie (5), d'une part, un rail (12) qui est rectiligne et, d'autre part, un rail (13) qui est curviligne.

Ce rail (13) curviligne a une courbure et une position par rapport au rail (12) rectiligne qui permet d'établir entre les deux, une distance D qui est appropriée pour réaliser le guidage des préformes (2) et cette distance D est constante sur la longueur du chemin de guidage desdites préformes (2).

L'entrée (134) du rail (13) curviligne se situe à l'aplomb de l'entrée (124) du rail (12) rectiligne.

Par ailleurs, la sortie (135) du rail (13) curviligne se situe latéralement, ou transversalement, au même niveau que la sortie (125) du rail (12) rectiligne.

D'après le mode de réalisation détaillé sur les différentes figures, les rails (12) et (13) correspondent aux arêtes respectives de deux guides repérés (15) et (16) en forme de simples plats.

En effet le rail (12) rectiligne est l'une des arêtes d'un guide (15) qui est disposé horizontalement; le rail (13) est une arête également du guide (16) qui est disposé verticalement mais cette arête est façonnée de façon appropriée pour permettre l'établissement d'une distance D constante entre les deux rails, laquelle distance D est sensiblement supérieure au diamètre du corps (6) de la préforme (2), sous la collerette (8).

Les arêtes des rails (12) et (13) sont façonnées en demi-rond au moyen d'un outil de forme. Les préformes (2) sont guidées sur les rails (12) et (13) et elles glissent en basculant sur les arêtes en demi-rond, sans risque d'endommagement.

Le guide (15) est solidaire du bâti (17) du dispositif (1) de convoyage, figures 2 et 3, par des moyens appropriés et sa position peut être invariable. Il peut en effet servir de guide pour tout type de préformes (2).

En revanche, le guide (16) est lui aussi solidaire du bâti (17) mais sa position est variable en fonction du type et en particulier du diamètre du corps (6) des préformes (2). Ce guide (16) comporte, à sa partie amont, des moyens de fixation (18) qui, en coopération avec le bâti (17), permettent d'ajuster sa position à l'aplomb de l'entrée (124) du rail (12). De même, à sa partie aval, il comporte des moyens de fixation (19) qui permettent d'ajuster sa distance transversale par rapport à l'horizontale de la sortie (125) du rail (12).

Le rail (14) est lui aussi solidaire du bâti (17) du dispositif (1) de convoyage au moyen de bras (20) dont la longueur et la forme sont appropriées en fonction de leurs positions sur ledit dispositif. Ce rail (14) est façonné pour former, avec les deux autres rails (12) et (13), une sorte de tunnel dans lequel se trouve guidée et emprisonnée l'extrémité des préformes (2).

Les bras (20) peuvent être réglables et/ou déformables, par exemple, pour adapter facilement la position du rail (14) aux dimensions des préformes (2) et le placer approximativement dans la partie médiane du buvant (21).

## Revendications

1. Dispositif de convoyage pour produits du genre préformes, ledit dispositif formant une sorte de tunnel dans lequel se trouve guidée et emprisonnée l'extrémité desdites préformes, côté buvant, lequel tunnel est constitué de plusieurs rails portés par un bâti (17) et façonnés pour former une vrille qui s'étend depuis l'entrée (4) jusqu'à la sortie (5) dudit tunnel, les plusieurs rails étant :
- un rail (14) qui coopère avec l'extrémité des préformes, côté buvant (21), pour les retenir prisonnières ;
- deux rails qui assurent un guidage sous col desdites préformes, à savoir : - un rail (12) rectiligne et - un rail (13) curviligne, lequel rail (13) curviligne est façonné avec un profil qui permet d'établir un écartement constant entre ladite entrée (4) et ladite sortie (5) de la vrille, le rail (12) rectiligne correspond à l'arête d'un guide (15) en forme de simple plat, qui est fixé sur le bâti, et le rail (13) curviligne correspond à l'arête d'un guide (16) en forme de simple plat qui est fixé sur le bâti laquelle arête est façonnée avec une courbure telle que l'écartement avec l'arête du rail (12) rectiligne est constant.

2. Dispositif de convoyage en forme de vrille selon la revendication 1,
**caractérisé en ce que** le guide (15) muni du rail (12) rectiligne est placé horizontalement entre l'entrée (4) et la sortie (5) de la vrille.

3. Dispositif de convoyage en forme de vrille selon la revendications 1,
**caractérisé en ce que** le guide (16) muni du rail (13) curviligne est positionné verticalement entre l'entrée (4) et la sortie (5) de la vrille, sa partie amont (134) se situant à l'aplomb de la partie amont (124) du rail (12) rectiligne et sa partie aval (135) se situant au même niveau que la partie aval (125) dudit rail (12) rectiligne.

4. Dispositif de convoyage en forme de vrille selon la revendication 3,
**caractérisé en ce que** le rail (13) curviligne comporte, à sa partie amont (134), des moyens (18) assurant sa fixation sur le bâti (17), lesquels moyens permettent d'ajuster sa position à l'aplomb de l'entrée (124) du rail (12) rectiligne.

5. Dispositif de convoyage en forme de vrille selon la revendication 3,
**caractérisé en ce que** le rail (13) curviligne comporte, à sa partie aval (135), des moyens (19) assurant sa fixation sur le bâti (17), lesquels moyens permettent d'ajuster sa position transversale à l'horizontale de la sortie (125) du rail (12) rectiligne.

6. Dispositif de convoyage en forme de vrille selon la revendication 1,
**caractérisé en ce que**, selon les formes et dimensions des préformes (2) à convoyer, le profil du rail (13) curviligne est adapté au nouvel écartement à prendre en compte entre le rail (12) rectiligne et le rail (13) curviligne.

7. Dispositif de convoyage en forme de vrille selon la revendication 1,
**caractérisé en ce que** les rails (12) rectiligne et le rail (13) curviligne sont façonnés en demi-rond pour éviter de blesser les préformes (2).

## Patentansprüche

1. Fördervorrichtung für Vorformling-Produkte, wobei die Vorrichtung eine Art Tunnel ausbildet, in dem sich die Vorformlinge mit dem Trinkende geführt und eingefangen befinden, wobei der Tunnel aus einer Vielzahl durch ein Gestell (17) getragene Schienen ausgebildet wird und gestaltet ist, um eine Spirale auszubilden, die sich von dem Eingang (4) bis zu dem Ausgang (5) des Tunnels erstreckt, wobei die Vieizahl von Schienen sind:
- eine Schiene (14), die mit dem Trinkende (21) der Vorformlinge zusammenwirkt, um sie eingefangen zu halten;
- zwei Schienen, die eine Führung unter dem Hals der Vorformlinge sicherstellen und zwar: - eine gerade Schiene (12) und - eine gekrümmte Schiene (13), wobei die gekrümmte Schiene (13) mit einem Profil gestaltet ist, dass das Bilden einer konstanten Spurweite zwischen dem Eingang (4) und dem. Ausgang (5) des Tunnels ermöglicht,
wobei die gerade Schiene (12) zu der Kante einer einfachen flach geformten Führung (15) gehört, die an dem Gestell befestigt ist, und
die gekrümmte Schiene (13) zu der Kante einer einfachen flach geformten Führung (16) gehört, die an dem Gestell befestigt ist, wobei die Kante mit einer Krümmung ausgestaltet ist, sodass die Spurweite mit der Kante der geraden Schiene (12) konstant ist.

2. Fördervorrichtung in Form einer Spirale gemäß Anspruch 1, **dadurch gekennzeichnet, dass** die mit der geraden Schiene (12) ausgestattete Führung (15) horizontal zwischen dem Eingang (4) und dem Ausgang (5) der Spirale angeordnet ist.

3. Fördervorrichtung in Form einer Spirale gemäß Anspruch 1, **dadurch gekennzeichnet, dass** die mit der gekrümmten Schiene (13) ausgestattete Führung (16) vertikal zwischen dem Eingang (4) und dem Ausgang (5) der Spirale angeordnet ist, wobei sich ihr zulaufseitig liegender Abschnitt (134) sich lotrecht zu dem zulaufseitig liegenden Abschnitt (124) der geraden Schiene (12) befindet und ihr ablaufseitig liegender Abschnitt (135) sich auf der gleichen Höhe wie der ablaufseitig liegende Abschnitt (125) der geraden Schiene (12) befindet.

4. Fördervorrichtung in Form einer Spirale gemäß Anspruch 3, **dadurch gekennzeichnet, dass** die gekrümmte Schiene (13) in ihrem zulaufseitig liegenden Abschnitt (134) Mittel (18) zum Sichern
ihrer Befestigung an dem Gestell (17) umfassen, wobei die Mittel das lotrechte Anpassen ihrer Position zu dem Eingang (124) der geraden Schiene (12) ermöglichen.

5. Fördervorrichtung in Form einer Spirale gemäß Anspruch 3, **dadurch gekennzeichnet, dass** die gekrümmte Schiene (13) in ihrem ablaufseitig liegenden Abschnitt (135) Mittel (19) zum Sichern ihrer Befestigung an dem Gestell (17) umfassen, wobei die Mittel das Anpassen ihrer Position in Querrichtung zur Horizontalen des Ausgangs (125) der geraden Schiene (12) ermoglichen.

6. Fördervorrichtung in Form einer Spirale gemaß Arspruch 1, **dadurch gekennzeichnet, dass** gemäß der Formen und Abmesssungen der zu fördernden vorformlingen (2), das Profil der gekrümmten Schiene (13) an eine neue Spurweite durch Einbeziehen der geraden Schiene (12) und der gekrümmten Schiene (13) angepasst ist.

7. Fördervorrichtung in Form einer Spirale gemäß Anspruch 1, **dadurch gekennzeichnet, dass** die gerade Schiene (12) und die gekrümmte Schiene (13) halbrund gestaltet sind, um ein Verletzen der Vorformlinge (2) zu vermeiden.

## Claims

1. Conveyor device for products of the preform type, of the type forming a kind of tunnel wherein is guided and imprisoned the end of said preforms, on the neck side, said tunnel is comprised of several rails supported by a frame (17) and formed to shape a twist which extends from the entrance (4) to the exit (5) of said tunnel, the several rails being:
- a rail (14) which cooperates with the end of the preforms, on the neck side (21), in order to retain them prisoner;
- two rails which provide a guidance under the neck of said preforms, namely: - a straight rail (12) and a curved rail (13), said curved rail (13) is formed with a profile which makes it possible to establish a constant separation between said entrance (4) and said exit (5) of the twist, the straight rail (12) corresponds to the edge of a guide (15) in the form of a simple flat, which is fixed to the frame, and the curved rail (13) corresponds to the edge of a guide (16) in the form of a simple flat, which is fixed to the frame, said edge is formed with a curvature such as the separation with the wedge of the straight rail (12) is constant.

2. Conveyor device in the form of a twist according to claim 1, **characterised in that** the guide (15) provided with the straight rail (12) is positioned horizontally between the entrance (4) and the exit (5) of the twist.

3. Conveyor device in the form of a twist according to claim 1, **characterised in that** the guide (16) provided with the curved rail (13) is positioned vertically between the entrance (4) and the exit (5) of the twist, its upstream portion (134) located in alignment with the upstream portion (124) of the straight rail (12) and its downstream portion (135) located at the same level as the downstream portion (125) of said straight rail (12).

4. Conveyor device in the form of a twist according to claim 3, **characterised in that** the curved rail (13) comprises, at its upstream portion (134), means (18) providing for its fixing to the frame (17), said means making it possible to adjust its position in alignment with the entrance (124) of the straight rail (12).

5. Conveyor device in the form of a twist according to claim 3, **characterised in that** the curved rail (13) comprises, at its downstream portion (135), means (19) providing for its fixing to the frame (17), said means making it possible to adjust its transversal position to the horizontal of the exit (125) of the straight rail (12).

6. Conveyor device in the form of a twist according to claim 1, **characterised in that**, according to the forms and dimensions of the preforms (2) to be conveyed, the profile of the curved rail (13) is adapted to the new separation to be taken into account between the straight rail (12) and the curved rail (13).

7. Conveyor device in the form of a twist according to claim 1, **characterised in that** the straight rail (12) and the curved rail (13) are formed in half-rounds in order to prevent damaging the preforms (2).
